(19) Europäisches Patentamt
European Patent Office
Office européen des brevets

(11) **EP 1 749 406 B1**

(12) **EUROPÄISCHE PATENTSCHRIFT**

(45) Veröffentlichungstag und Bekanntmachung des Hinweises auf die Patenterteilung:
**19.08.2009 Patentblatt 2009/34**

(21) Anmeldenummer: **05740434.5**

(22) Anmeldetag: **28.04.2005**

(51) Int Cl.:
***H04N 17/00*** *(2006.01)*

(86) Internationale Anmeldenummer:
**PCT/EP2005/004586**

(87) Internationale Veröffentlichungsnummer:
**WO 2005/125220 (29.12.2005 Gazette 2005/52)**

(54) **VERFAHREN UND VORRICHTUNG ZUR BEWERTUNG DER GÜTE EINES SIGNALS**

METHOD AND DEVICE FOR EVALUATING THE QUALITY OF A SIGNAL

PROCEDE ET DISPOSITIF D'EVALUATION DE LA QUALITE D'UN SIGNAL

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **18.06.2004 DE 102004029421**

(43) Veröffentlichungstag der Anmeldung:
**07.02.2007 Patentblatt 2007/06**

(73) Patentinhaber: **Rohde & Schwarz GmbH & Co. KG**
**81671 München (DE)**

(72) Erfinder: **BALZ, Christoph**
**81543 München (DE)**

(74) Vertreter: **Körfer, Thomas**
**Mitscherlich & Partner**
**Patent- und Rechtsanwälte**
**Postfach 33 06 09**
**80066 München (DE)**

(56) Entgegenhaltungen:
**EP-A- 0 869 684**   **DE-C1- 19 521 408**
**US-A1- 2002 071 614**   **US-B1- 6 496 221**

**Beschreibung**

Die Erfindung betrifft ein Verfahren und eine Vorrichtung zur Bewertung der Güte eines Signals, insbesondere eines nachrichtentechnischen Signals.

Sender und Modulatoren beispielsweise des digitalen terrestrischen TV-Rundfunks (DVB-T = Digital Video Broadcasting Terrestrial) erzeugen hochkomplexe Übertragungssignale, insbesondere mit digitalen Mehrträgerverfahren modulierte Übertragungssignale (z.B. OFDM-Signale: orthogonal frequency division multiplexing signals). Diese hochkomplexen nachrichtentechnischen Signale sind durch eine Vielzahl von Kenngrößen charakterisiert und können durch eine Vielzahl von Störungen verfälscht sein.

Aufgabe der Feldmessung ist es beispielsweise bei DVB-T, an einer beliebigen Stelle im Netz des digitalen terrestrischen TV-Rundfunks das digitale DVB-T-Übertragungssignal verzerrungsfrei zu erfassen und anhand mehrerer Meßwerte des empfangenen digitalen DVB-T-Übertragungssignals auf der Basis einer digitalen Meßwertverarbeitung bestimmte vorher festgelegte Kenngrößen des empfangenen digitalen DVB-T-Übertragungssignals zu bestimmen. Diese Kenngrößen charakterisieren die Güte des digitalen Übertragungs-signals und werden von einem Fachmann der digitalen Fernsehtechnik für Diagnose- und System- oder Geräteabnahme-Zwecke herangezogen.

In der Praxis werden an verschiedenen Positionen des digitalen Rundfunknetzes Meßempfänger aufgestellt, die zu verschiedenen Zeitpunkten das digitale DVB-T-Übertragungssignal empfangen und daraus mittels digitaler Signalverarbeitung die einzelnen Kenngrößen ermitteln und mit entsprechenden vorher festgelegten Referenzwerten vergleichen. Liegt die jeweils ermittelte Kenngröße innerhalb eines bestimmten vorher festgelegten Toleranzbereiches zum Referenzwert, so kann das digitale DVB-T-Übertragungssignal hinsichtlich der Kenngröße als korrekt qualifiziert werden.

Die Offenbarung des Dokuments US 2002/0064233 A1 enthält ein Verfahren und eine Vorrichtung zur Ermittlung der Abweichung einer Kenngröße eines Signals - beispielsweise unterschiedliche Verstärkungen zwischen Inphase- und Quadratur-Komponente eines empfangenen Signals (I/Q-Gain-Imbalance) - zum zugehörigen Referenzwert - korrespondierend identische Verstärkungen der Inphase- und Quadratur-Komponente bei den jeweiligen Referenzsymbolen des verwendeten Symbolalphabets - und einer anschließenden Berechnung einer Güte - korrespondierend das Ausmaß der I/Q-Gain-Imbalance - aus den gemittelten Abweichungen zwischen den einzelnen gemessenen Kenngrößen und den zugehörigen Referenzgrößen.

Ein Verfahren, bei dem für eine Kenngröße des Signals eine derartige Qualifizierung, insbesondere mit einem zeitlich veränderlichen Referenzwert, durchgeführt wird, ist in der DE 101 63 505 A1 offenbart.

Liegt ein komplexeres Übertragungssignal, beispielsweise ein OFDM-moduliertes Übertragungssignal vor, das durch eine Vielzahl von Kenngrößen charakterisiert wird und durch eine Vielzahl von Störungen verfälscht werden kann, vergrößert sich der Aufwand in der Qualifizierung gegenüber der in der DE 101 63 505 A1 offenbarten Lösung erheblich. Der mit der Diagnose oder Zertifizierung befaßte Fachmann wird dabei sehr schnell mit einer sehr komplexen und zeitaufwändigen Qualifizierung konfrontiert sein. In der Diagnose und Zertifizierung wird er sich sehr schnell in Detailbetrachtungen und Detailoptimierungen begeben. Die Auswirkungen dieser Detailoptimierungen auf die Gesamtgüte des digitalen OFDM-modulierten Übertragungssignals sind dabei schwer qualitativ wie quantitativ einzuschätzen. Der Gesamtüberblick über den aktuellen bzw. den bisher durch Optimierungsmaßnahmen erreichten Stand der Güte des OFDM-modulierten Übertragungssignals geht hierbei leicht verloren.

Der Erfindung liegt daher die Aufgabe zugrunde, auf der Basis von gemessenen Kenngrößen eines komplexen Übertragungssignals ein Verfahren und eine Vorrichtung zu schaffen, mit dem bzw. der relativ einfach und schnell die Güte des komplexen Übertragungssignals ermittelt werden kann.

Die Aufgabe wird durch ein Verfahren zur Bestimmung der Güte eines Signals nach Anspruch 1 und eine Vorrichtung zur Bewertung der Güte eines Signals nach Anspruch 12 gelöst. Vorteilhafte Ausgestaltungen der Erfindung sind in den abhängigen Ansprüchen angegeben.

Das erfindungsgemäße Verfahren ermittelt hierzu für jede Kenngröße des Übertragungssignals die Abweichung der gemessenen Kenngröße zu einem vorher festgelegten Referenzwert und führt für jede somit ermittelte Abweichung eine Normierung mit der maximal möglichen Abweichung der Kenngröße zu ihrem jeweiligen Referenzwert durch. Die Normierung der einzelnen dimensionsbehafteten Abweichungen ermöglicht eine sich daran anschließende einheitliche mathematische Behandlung aller durch die Normierung dimensionslos gewordenen Abweichungen. Über Gewichtungsfaktoren kann der Einfluß einer Kenngröße und deren Abweichung zum jeweiligen Referenzwert auf die Güte des komplexen Übertragungssignals individuell eingestellt werden. Durch Mittelung der gewichteten und normierten Abweichungen wird die Güte des komplexen Übertragungs-signals ermittelt.

Die maximal mögliche Abweichung eine Kenngröße zu ihrem Referenzwert ergibt sich aus der Maximalabweichung des Referenzwertes zur oberen oder unteren Signalbereichsgrenze, welche beide zuvor festgelegt werden. Die Abweichungen werden durch Differenzbildung zwischen dem Referenzwert und der gemessenen Kenngröße - im Falle der Maximalabweichung durch Differenzbildung zwischen dem Referenzwert und der oberen oder unteren Signalbereichsgrenze - und anschließende Betragsbildung ermittelt. Auf diese Weise ist gewährleistet, daß auch im Falle negativer Differenzen bzw. im Falle negativer Kenngrößen positive Abweichungen in die weitere Mittelung münden.

Wird eine Kenngröße außerhalb des durch die vorher festgelegte obere und untere Signalbereichsgrenze definierten Signalbereichs gemessen, so wird im erfindungsgemäßen Verfahren die gemessene Kenngröße für die Auswertung auf die obere oder untere Signalbereichsgrenze begrenzt. Somit wird erreicht, daß durch die anschließende Normierung der jeweiligen Abweichung die normierte Abweichung jeweils innerhalb des normierten Bereichs zwischen $\pm$ 1 zu liegen kommt.

Die Bewertung der einzelnen normierten Abweichungen zueinander mittels gewichteter Mittelung kann je nach Kenngrößentyp entweder linearer, quadratisch, logarithmisch oder exponentiell erfolgen.

Der Anschaulichkeit halber werden die ermittelten Abweichungs- und Gütewerte grafisch visualisiert. Hierbei werden z. B. Farbskalen benutzt, mit denen der ermittelte Wert der Abweichung oder die Güte des Signals durch einen definierten Farbwert charakterisiert wird. Die Überschreitung des vorher festgelegten Signalbereichs durch die gemessene Kenngrößen kann mit einem definierten Farbwert, beispielsweise rot, als Warnung unterstrichen werden.

In der erfindungsgemäßen Vorrichtung zur Bewertung der Güte eines Signals sind mehrere Test-Meßempfängerr im Netz des digitalen terrestrischen TV-Rundfunks verteilt und übertragen ihre empfangenen DVB-T-Übertragungssignale über Standard-Datenübertragungsschnittstellen an einen Hauptrechner zur Weiterverarbeitung. Das Verfahren und die Vorrichtung zur Bestimmung der Güte eines Signals werden nachfolgend unter Bezugnahme auf die Zeichnung näher erläutert. In der Zeichnung zeigen:

Fig. 1A, 1B      ein Blockschaltbild der efindungsgemäßen Vorrichtung zur Bewertung der Güte eines Signals,

Fig. 2      ein Flußdiagramm des erfindungsgemäßen Verfahrens zur Bestimmung der Güte eines Signals,

Fig. 3      eine grafische Darstellung der durch das erfindungsgemäße Verfahren ermittelten Ergebnisse (Teil 1) und

Fig. 4      eine grafische Darstellung der durch das erfindungsgemäße Verfahren ermittelten Ergebnisse (Teil 2).

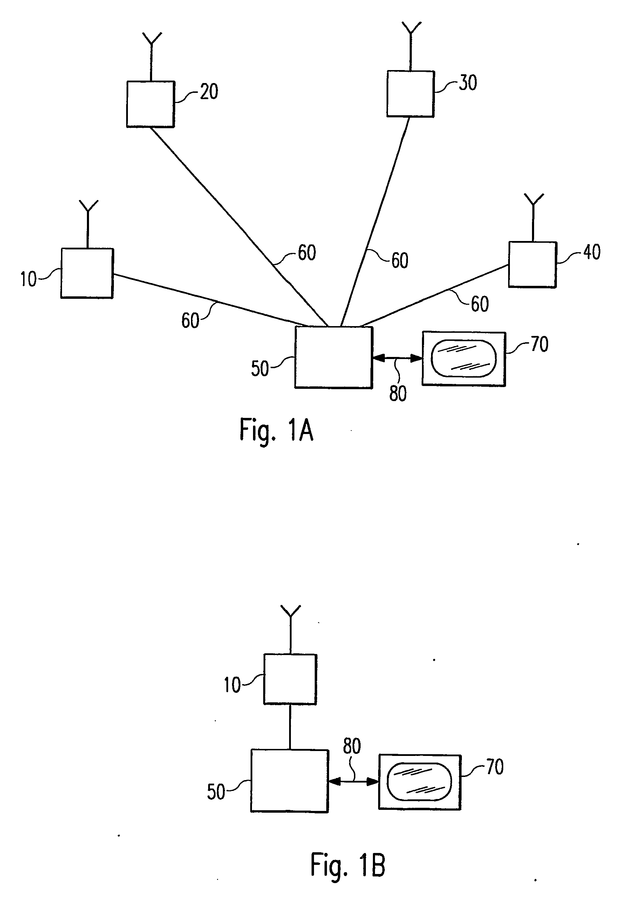

Die erfindungsgemäße Vorrichtung zur Bewertung der Güte eines Signals besteht in Fig. 1A aus mehreren Test-Meßempfängern 10, 20, 30, 40, beispielweise der von der Firma Rohde & Schwarz hergestellte Test-Meßempfänger EFA, die an einzelnen Positionen im Netz des digitalen terrestrischen TV-Rundfunks - DVB-T - installiert sind. Jeder einzelne Test-Meßempfänger 10, 20, 30, 40 mißt jeweils die einzelnen Kenngrößen des DVB-T-Übertragungssignals. Die Meßwerte in den einzelnen Test-Meßempfängern 10, 20, 30, 40 werden von einem Hauptrechner 50 über eine Fernsteuerung bzw. Fernabfrage auf der Basis von Standard-Datenübertragungsschnittstellen 60, beispielsweise RS 232- oder IEC-Bus-Schnittstellen, abgefragt und entsprechend dem erfindungsgemäßen Verfahren verarbeitet und visualisiert. Die Visualisierung erfolgt über eine mit dem Hauptrechner 50 über eine Visualisierungsschnittstelle 80 verbundene grafische Anzeigeeinrichtung 70. Die grafische Anzeigeeinrichtung 70 dient dem Anwender auch als Eingabe-Medium zur Einstellung von Parametern und zur Steuerung des gesamten erfindungsgemäßen Verfahrens.

In der erfindungsgemäßen Vorrichtung werden von den eingesetzten Test-Meßempfängern 10, 20, 30, 40 mit den erfaßten Kenngrößen $X_i$ die üblichen Meßdaten-Vorverarbeitungsfunktionen - beispielsweise Filterung, Mittelung, Analog-Digital-Wandelung usw. - durchgeführt.

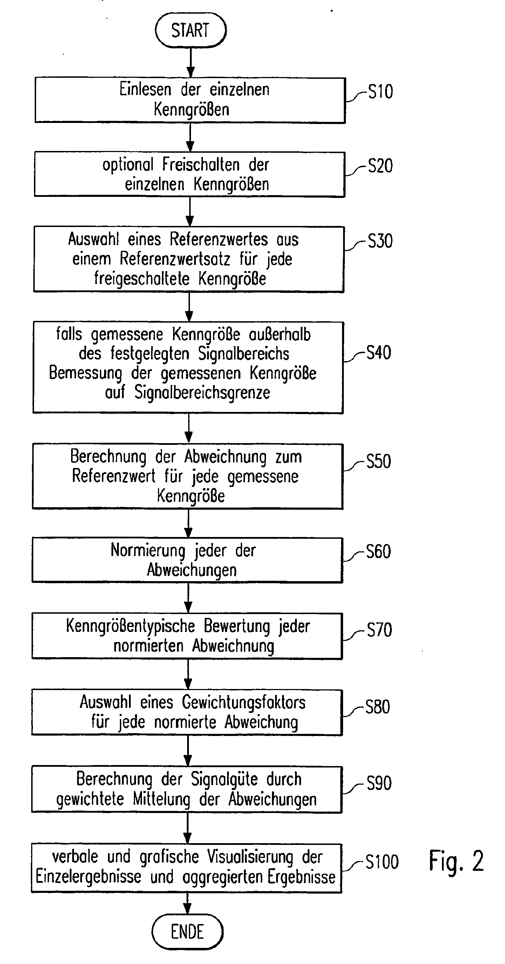

Das erfindungsgemäße Verfahren zur Bewertung der Güte $Q_s$ eines Signals, insbesondere eines DVB-T-Übertragungs-signals, beginnt gemäß Fig. 2 mit dem Verfahrensschritt S10, in dem die vorher für die Bewertung der Güte $Q_s$ des Signals festgelegten Kenngrößen $X_i$ von einem Test-Meßempfänger 10, 20, 30, 40 eingelesen werden.

Im darauffolgenden Verfahrenschritt S20 können vom Anwender in Hauptrechner 50 bestimmte Kenngrößen $X_i$ aus, der Maximalanzahl von eingelesenen Kenngrößen $X_n$ für die weitere Verarbeitung gemäß dem erfindungsgemäßen Verfahren über eine Kontroll-Option freigeschalten oder gesperrt werden. Dem Anwender steht hierfür über die Visualisierungsschnittstelle 80 für jede festgelegte Kenngröße ein Kontrollkästchen zur Verfügung.

Vom Anwender werden im nächsten Verfahrenschritt S30 für jede festgelegte und freigeschaltene Kenngröße $X_i$ ein Referenzwert in $X_{REFi}$ bestimmt. Dieser ergibt sich beispielsweise aus den Spezifikationen der Übertragungsstandards, beispielsweise eingesetztes Modulationsverfahren, oder aus den vom Betreiber des digitalen TV-Rundfunks gewünschten Qualitätsanforderungen. Da diese Referenzwerte $X_{REFi}$ jeder einzelnen Kenngröße $X_i$ des Übertragungssignals nicht zwingend feste Werte darstellen müssen, kann der Anwender über die Visualisierungs-Schnittstelle 80 aus vorher festgelegten Referenzwertsätzen den jeweils für die Test-Messung geeigneten Referenzwert $X_{REFi}$ zu jeder einzelnen Kenngröße $X_i$ auswählen und bei Bedarf modifizieren.

Analog zu den Referenzwertsätzen kann der Anwender für jede einzelne Kenngröße $X_i$ in einer bestimmten Test-Messung aus vorher festgelegten Datensätzen ein Daten-Paar $X_{upi}$ und $X_{lowi}$ für die obere und die untere Signalbereichsgrenze auswählen. Liegt die eingelesene und freigeschaltene Kenngröße $X_i$ außerhalb des Signalbereichs, so wird die Kenngröße $X_i$ in Verfahrenschritt S40 gemäß Gleichung (1) auf den Wert der oberen Signalbereichsgrenze $X_{upi}$ gesetzt, falls die Kenngröße $X_i$ größer als die obere Signalbereichsgrenze $X_{upi}$ ist, oder auf den Wert der unteren Signalbereichsgrenze $X_{lowi}$ gesetzt, falls die Kenngröße $X_i$ kleiner als die untere Signalbereichsgrenze $X_{lowi}$ ist.

$$
\begin{aligned}
X_i = \ & X_{upi} && \text{für } X_i > X_{upi} \\
& X_{lowi} && \text{für } X_i < X_{lowi} \\
& X_i && \text{sonst} \hspace{3cm} (1)
\end{aligned}
$$

Kommt eine gemessene Kenngröße $X_i$ außerhalb des zulässigen bzw. definierten Signalbereichs zu liegen, so wird dies vom erfindungsgemäßen Verfahren dem Anwender über die Visualisierungs-Schnittstelle 80 signalisiert, beispielsweise durch eine Kennzeichnung der Kenngröße $X_i$ mit der Farbe rot.

Der darauffolgende Verfahrensschritt S50 beinhaltet für jede Kenngröße $X_i$ die Berechnung der Abweichung $\Delta X_i$ der eingelesenen und freigeschalteten Kenngröße $X_i$ von ihrem Referenzwert $X_{Refi}$ durch Differenzbildung der Kenngröße $X_i$ vom zugehörigen Referenzwert $X_{Refi}$ gemäß Gleichung (2). Da für eine einheitliche mathematische Weiterbehandlung jeder einzelnen Abweichung eine positive Abweichung anzustreben ist, wird in Verfahrensschritt S50 zusätzlich zur Differenzbildung eine Betragsbildung durchgeführt. Auf diese Weise führen negative Differenzen - beispielsweise Differenzen zwischen dem Rauschreferenzpegel und dem gemessenen Rauschpegel - oder Kenngrößen mit negativen Werten - beispielsweise negative Signalpegel - immer zu positiv wertigen Abweichungen.

$$
\Delta X_i = \left| X_{Refi} - X_i \right| \hspace{3cm} (2)
$$

Da die einzelnen eingelesenen und freigeschalteten Kenngrößen $X_i$ dimensionsbehaftete Größen sind und im allgemeinen in unterschiedlichen Größenordnungsbereichen liegen, ist im folgenden Verfahrensschritt S60 des erfindungsgemäßen Verfahrens eine Normierung der einzelnen Abweichungen $\Delta X_i$ durchzuführen. Durch die Normierung ist gewährleistet, daß alle ermittelten Abweichungen $\Delta X_i$ einheitlich in den folgenden Verfahrensschritten des erfindungsgemäßen Verfahrens weiterverarbeitet werden können. Als Bezugsgröße für die Normierung der Abweichungen $\Delta X_i$ wird die jeweils maximal mögliche Abweichung $\Delta X_{iMAX}$ zugrunde gelegt. Diese ergibt sich gemäß Gleichung (3) aus dem Maximalwert der Abweichung $\Delta X_i$ des jeweiligen Referenzwertes $X_{Refi}$ von der jeweiligen oberen Signalbereichsgrenze $X_{upi}$ oder unteren Signalbereichsgrenze $X_{lowi}$. Positive Werte für die jeweils maximal möglichen Abweichungen $\Delta X_{iMax}$ werden in Gleichung (3) in Analogie zu Gleichung (2) durch Betragsbildung erzielt.

$$
\begin{aligned}
\Delta X_{iMAX} = \ & \left| X_{Refi} - X_{upi} \right| && \text{für } \left| X_{Refi} - X_{upi} \right| > \left| X_{Refi} - X_{lowi} \right| \\
& \left| X_{Refi} - X_{lowi} \right| && \text{für } \left| X_{Refi} - X_{lowi} \right| > \left| X_{Refi} - X_{upi} \right|
\end{aligned}
$$
$$(3)$$

Mit der gemäß Gleichung (3) jeweils ermittelten maximal möglichen Abweichung $\Delta X_{iMax}$ erfolgt die Normierung der jeweiligen Abweichung $\Delta X_i$ durch Divisionsbildung. Die normierte Abweichung $\Delta \overline{X}_i$ ergibt sich somit gemäß Gleichung (4):

$$
\Delta \overline{X}_i = \frac{\left| X_{Refi} - X_i \right|}{\Delta X_{iMAX}} = \frac{\Delta X_i}{\Delta X_{iMAX}} \hspace{2cm} (4)
$$

Im nächsten Verfahrensschritt S70 wird die unterschiedliche Bedeutung unterschiedlich großer Abweichungen einer Kenngröße $X_i$ zu ihren jeweiligen Referenzwert $X_{Refi}$ auf die Güte $Q_s$ eines Signals berücksichtigt. Hierzu steht dem Anwender eine Palette von Bewertungsfunktionen - beispielsweise lineare, quadratische, exponentielle und logarithmische Bewertung - zur Verfügung.

Bei der linearen Bewertung der normierten Abweichung $\Delta X_i$ liegt eine lineare Abhängigkeit zwischen der normierten Abweichung $\Delta \overline{X}_i$ und der Güte $Q_s$ des Signals vor. Die lineare Bewertung der normierten Abweichung $\Delta \overline{X}_i$ im Rahmen der Berechnung der Güte $Q_s$ des Signals wird beispielsweise bei folgenden Kenngrößen $X_i$ des Übertragungs-

signals angewendet:

- Modulationsfehlervektor als Effektivwert im logarithmischen Maßstab oder prozentual (MER RMS dB oder %)
- Fehlervektor als Effektivwert in % (EVM RMS %)
- maximaler Modulationsfehler in % (MER MAX %)
- maximaler Fehlervektor in % (EVM MAX %)
- Anzahl Paketfehler / Zeiteinheit
- Anzahl Segmentfehler / Zeiteinheit
- oberer Schulterabstand im logarithmischen Maßstab (in dB)
- unterer Schulterabstand im logarithmischen Maßstab (in dB)
- Verhältnis zwischen Modulationssignal / Trägersignal in dB
- Amplitudenassymmetrie bei IQ-Modulation
- Quadraturfehler bei IQ-Modulation
- Restträgerunterdrückung im logarithmischen Maßstab (in dB) .
- Signal-Rauschabstand im logarithmischen Maßstab (in dB)
- Phasenflackern (in dB)
- Amplitudenflackern (in dB)
- Amplitudenlinearität (in dB)
- Phasenlinearität (in °)
- Gruppenlaufzeitlinearität
- Signalpegel (in dB)
- Trägeramplitudenfehler im logarithmischen Maßstab (in dB)
- Crest-Faktor
- Leistungsüberschreitung mit komplementärer Verteilungsfunktion (CCDF)

Im Idealfall einer Übereinstimmung der gemessenen Kenngröße $X_i$ zu ihrem Referenzwert $X_{Refi}$ ergibt sich für die normierte Abweichung $\Delta \overline{X}_i$ gemäß Gleichung (4) ein Wert von 0, während im schlechtesten Fall der maximalen Abweichung $\Delta X_{iMAX}$ der gemessenen Kenngröße $X_i$ zu ihrem Referenzwert $X_{Refi}$ die normierte Abweichung $\Delta \overline{X}_i$ gemäß Gleichung (4) einen Wert von 1 aufweist. Da aber eine maximale Abweichung $\Delta X_{iMax}$ einer Kenngröße $X_i$ von ihrem Referenzwert $X_{Refi}$ einen minimalen Beitrag $P_i$ der Kenngröße $X_i$ zur Güte $Q_s$ eines Signals leistet und eine Übereinstimmung von gemessener Kenngröße $X_i$ zu ihrem Referenzwert $X_{Refi}$ einen maximalen Beitrag $P_i$ der Kenngröße $X_i$ zur Güte $Q_s$ des Signals leistet, wird der Beitrag $P_i$ eine Kenngrößen $X_i$ zur Güte $Q_s$ des Signals durch Komplementierung mittels Subtraktion der normierten Abweichung $\Delta \overline{X}_i$ vom Wert 1 gemäß Gleichung (5a) für den Fall der linearen Bewertung der normierten Abweichung $\Delta \overline{X}_i$ berechnet:

$$ P_i = 1 - \frac{|X_{Refi} - X_i|}{|\Delta X_{iMax}|} \tag{5a} $$

Bei der quadratischen Bewertung der normierten Abweichung $\Delta \overline{X}_i$ liegt eine Höherbewertung von betragsmäßig. größeren normierten Abweichungen $\Delta \overline{X}_i$ gegenüber betragsmäßig kleineren normierten Abweichungen $\Delta \overline{X}_i$ mittels quadratischer Bewertung vor, da jene einen deutlich stärkeren negativen Einfluß auf die Güte $Q_s$ des Signals als letztere bewirken. Die quadratische Bewertung der normierten Abweichung $\Delta \overline{X}_i$ bei der Berechnung der Güte $Q_s$ des Signals wird beispielsweise bei folgenden Kenngrößen angewendet:

- Modulationsfrequenzoffset
- Trägerfrequenzoffset
- Symbolratenoffset
- Bitratenoffset

Der Beitrag $P_i$ einer Kenngröße $X_i$ zur Güte $Q_s$ des Signals für den Fall der quadratischen Bewertung der normierten Abweichung $\Delta \overline{X}_i$ berechnet sich gemäß Gleichung (5b):

$$P_i = 1 - \left(\frac{|X_{Refi} - X_i|}{|\Delta X_{iMax}|}\right)^2 \qquad (5b)$$

Die logarithmische Bewertung der normierten Abweichung $\Delta \overline{X}_i$ wird bei Kenngrößen $X_i$ eingesetzt, bei denen der Exponent die signifikante Größe ist. Die Bitfehlerrate (BER), die über die einen Exponentialterm enthaltende Fehlerfunktion berechnet wird, ist eine typische Kenngröße $X_i$ für eine logarithmische Bewertung. Somit wird die logarithmische Bewertung beispielsweise bei folgenden Kenngrößen $X_i$ angewendet:

- Bitfehlerrate vor Viterbi
- Bitfehlerrate vor Reed-Solomon
- Bitfehlerrate nach Reed-Solomon

Der Beitrag $P_i$ einer Kenngröße $X_i$ zur Güte $Q_s$ des Signals für den Fall der logarithmische Bewertung berechnet sich gemäß Gleichung (5c):

$$P_i = 1 - \frac{\left|\log\frac{X_{Refi}}{X_i}\right|}{\left|\log\frac{X_{Refi}}{X_{lowi}}\right|} \qquad \text{für} \quad \left|\log\frac{X_{Refi}}{X_{lowi}}\right| > \left|\log\frac{X_{Refi}}{X_{upi}}\right|$$

$$= 1 - \frac{\left|\log\frac{X_{Refi}}{X_i}\right|}{\left|\log\frac{X_{Refi}}{X_{upi}}\right|} \qquad \text{für} \quad \left|\log\frac{X_{Refi}}{X_{upi}}\right| > \left|\log\frac{X_{Refi}}{X_{lowi}}\right| \qquad (5c)$$

Die exponentielle Bewertung der normierten Abweichung $\Delta \overline{X}_i$ wird bei Kenngrößen $X_i$ eingesetzt, bei denen der Logarithmus der signifikanten Größe ermittelt wird, beispielsweise bei Signalpegeln, die im logarithmischen Maßstab in Dezibel erfaßt werden und durch die exponentiell Bewertung in den linearen Maßstab übergeführt werden.

Der Beitrag $P_i$ einer Kenngröße $X_i$ zur Güte $Q_s$ des Signals für den Fall der exponentiellen Bewertung berechnet sich gemäß Gleichung (5d):

$$P_i = 1 - \frac{\left|e^{X_{Refi}} - e^{X_i}\right|}{\left|e^{X_{Refi}} - e^{X_{lowi}}\right|} \quad \text{für} \quad \left|e^{X_{Refi}} - e^{X_{lowi}}\right| > \left|e^{X_{Refi}} - e^{X_{upi}}\right|$$

$$= 1 - \frac{\left|e^{X_{Refi}} - e^{X_i}\right|}{\left|e^{X_{Refi}} - e^{X_{upi}}\right|} \quad \text{für} \quad \left|e^{X_{Refi}} - e^{X_{upi}}\right| > \left|e^{X_{Refi}} - e^{X_{lowi}}\right| \quad (5d)$$

Im darauffolgenden Verfahrensschritt S80 wird für jeden Beitrag $P_i$ der Kenngröße $X_i$ ein Gewichtungsfaktor $G_i$ aus einem vorher festgelegten Satz von Gewichtungsfaktoren $G_i$ gewählt. Dieser Gewichtungsfaktor $G_i$ kann vom Anwender über die Visualisierungs-Schnittstelle 80 aus dem vorher festgelegten Satz von Gewichtungsfaktoren $G_i$ ausgewählt werden und bei Bedarf modifiziert werden. Mit den einzelnen Gewichtungsfaktoren $G_i$ wird der jeweilige Beitrag $P_i$ der einzelnen Kenngröße $X_i$ für die Bestimmung der Güte $Q_s$ des Signals festgelegt. Werden beispielsweise mehrere Kenngrößen $X_i$ für die Bestimmung der Güte $Q_s$ des Signals herangezogen, die in inhaltlicher Hinsicht ähnlich oder verwandt sind, so werden diese jeweils mit einem geringeren Gewichtungsfaktor $G_i$ bewertet, um den Aspekt der inhaltlich ähnlich gelagerten Kenngrößen $X_i$ nicht gegenüber den durch die übrigen Kenngrößen $X_i$ repräsentierten Aspekte überzubewerten.

Durch Bildung der Produkte aus den Beiträgen $P_i$ der einzelnen Kenngrößen $X_i$ mit den zugehörigen Gewichtungsfaktoren $G_i$ kann der von einer Kenngröße $X_i$ über ihren Beitrag $P_i$ erzielte Anteil $Q_i$ an der Güte $Q_s$ des Signals gemäß Gleichung (6) berechnet werden:

$$Q_i = \frac{G_i * P_i}{\sum_{i=1}^{n} G_i * P_i} * 100\% \tag{6}$$

Der Verfahrensschritt S90 beinhaltet die Berechnung der Güte $Q_s$ des Signals. Diese ergibt sich gemäß Gleichung (7) folglich durch Gewichtung der mittels Gleichung (5a), (5b), (5c) und (5d) berechneten Beiträge $P_i$ aller insgesamt n eingelesenen und freigeschalteten Kenngrößen $X_i$ mit den jeweils ausgewählten Gewichtungsfaktoren $G_i$ und anschließende Mittelwertbildung.

$$Q_s = \frac{\sum_{i=1}^{n} G_i * P_i}{\sum_{i=1}^{n} G_i} * 100\% \tag{7}$$

Der Erfüllungsgrad $E_i$ einer Kenngröße $X_i$ ergibt sich gemäß Gleichung (8a) für die lineare Bewertung, gemäß Gleichung (8b) für die quadratischen Bewertung, gemäß Gleichung (8c) für die logarithmische Bewertung und gemäß Gleichung (8d) für die exponentielle Bewertung durch Multiplikation der Gleichungen (5a), (5b), (5c) und (5d) mit 100%.

$$E_i = 1 - \frac{|X_{Refi} - X_i|}{|\Delta X_{iMax}|} * 100\% = P_i * 100\% \tag{8a}$$

$$E_i = 1 - \left(\frac{|X_{Refi} - X_i|}{|\Delta X_{iMax}|}\right)^2 * 100\% = P_i * 100\% \tag{8b}$$

$$E_i = 1 - \frac{\left|\log\frac{X_{Refi}}{X_i}\right|}{\left|\log\frac{X_{Refi}}{X_{lowi}}\right|} * 100\% \text{ für } \left|\log\frac{X_{Refi}}{X_{lowi}}\right| > \left|\log\frac{X_{Refi}}{X_{upi}}\right|$$

$$= 1 - \frac{\left|\log\frac{X_{Refi}}{X_i}\right|}{\left|\log\frac{X_{Refi}}{X_{upi}}\right|} * 100\% \text{ für } \left|\log\frac{X_{Refi}}{X_{upi}}\right| > \left|\log\frac{X_{Refi}}{X_{lowi}}\right| \tag{8c}$$

$$E_i = 1 - \frac{\left| e^{X_{Refi}} - e^{X_i} \right|}{\left| e^{X_{Refi}} - e^{X_{lowi}} \right|} * 100\% \text{ für } \left| e^{X_{Refi}} - e^{X_{lowi}} \right| > \left| e^{X_{Refi}} - e^{X_{upi}} \right|$$

$$= 1 - \frac{\left| e^{X_{Refi}} - e^{X_i} \right|}{\left| e^{X_{Refi}} - e^{X_{upi}} \right|} * 100\% \text{ für } \left| e^{X_{Refi}} - e^{X_{upi}} \right| > \left| e^{X_{Refi}} - e^{X_{lowi}} \right| \quad (8d)$$

Im abschließenden Verfahrensschritt S100 werden die ermittelten Ergebnisse grafisch über die grafische Anzeigeeinrichtung 70 visualisiert.

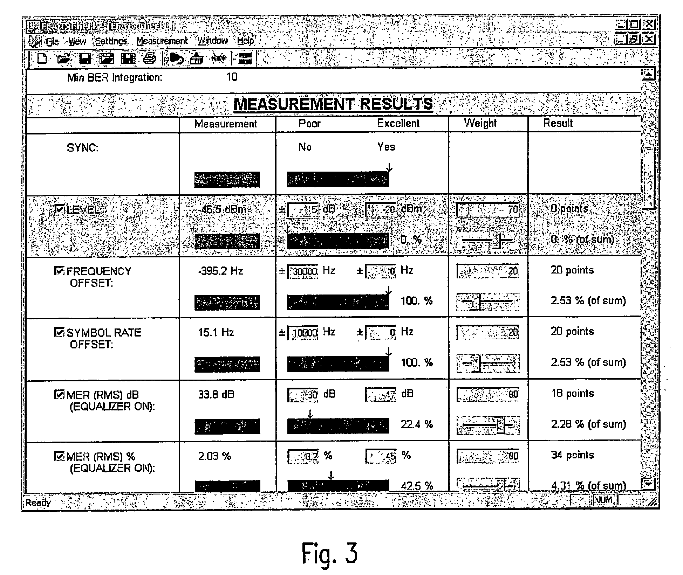

In Fig. 3 sind beispielhaft mehrere Kenngrößen $X_i$ grafisch dargestellt. In der ersten Spalte der Visualisierung von Fig. 3 ist die verbale Bezeichnung bzw. die Abkürzung der jeweiligen Kenngröße $X_i$ aufgeführt. In der zweiten Spalte der Visualisierung ist der gemessenen Wert der jeweiligen Kenngröße $X_i$ als Zahlenwert mit zugehörigen Dimension und gleichzeitig durch einen Farbwert dargestellt, der zum Erfüllungsgrad $E_i$ der gemessenen Kenngröße $X_i$ gemäß der Gleichungen (8a) bis (8d) korrespondiert. In der dritten Spalte der Visualisierung ist der Erfüllungsgrad $E_i$ der gemessenen Kenngröße $X_i$ als Zahlenwert in Prozentangabe dargestellt. Gleichzeitig kann der dritten Spalte der Visualisierung anhand der Positionierung des Pfeils in der Farbskala die Beurteilung des Erfüllungsgrades $E_i$ der gemessenen Kenngröße $X_i$ im Hinblick auf schlechtester Erfüllungsgrad (poor) oder bester Erfüllungsgrad (excellent) entnommen werden. Die vierte Spalte der Visualisierung enthält den ausgewählten Gewichtungsfaktor (weight) $G_i$ der Kenngröße $X_i$. In der fünften Spalte der Visualisierung ist schließlich der jeweilige Beitrag (Anzahl der erzielten Punkte: points) $P_i$ gemäß Gleichung (5a) bis (5b) und der Anteil $Q_i$ der Kenngröße $X_i$ an der Güte $Q_s$ des Signals gemäß Gleichung (6) aufgeführt.

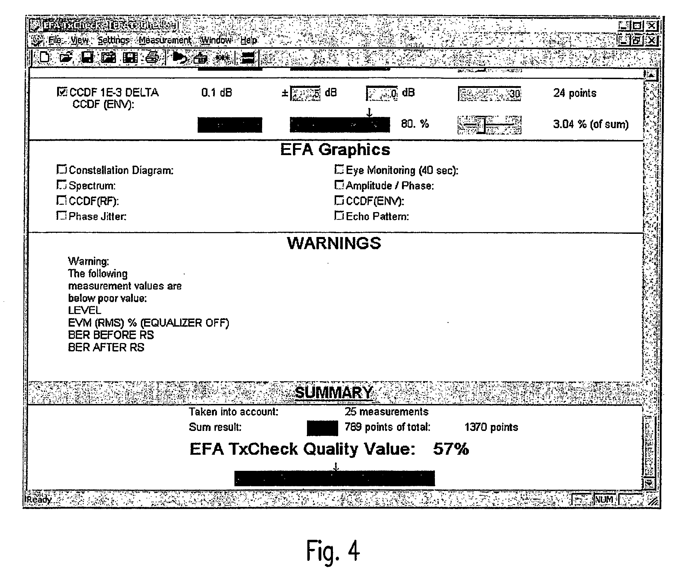

Fig. 4 beinhaltet die Fortsetzung der grafischen Visualisierung der Fig. 3. Dargestellt sind Auswahlmöglichkeiten zu grafischen Darstellungen (EFA Graphics), beispielsweise Zustandsdiagramm (constellation diagram), Augenmuster (eye monitoring), Frequenzspektrum (spectrum), komplementärer Verteilungsfunktion (CCDF) usw.. Zusätzlich sind Warnungen (warnings) zu Signalbereichsüberschreitungen von gemessenen Kenngrößen $X_i$ dargestellt. Schließlich ist im unteren Bereich der grafischen Visualisierung in Fig. 4 die ermittelte Güte (quality value) $Q_s$ des Übertragungssignals als Prozentangabe aufgeführt. Die grafische Visualisierung in Fig. 4 beinhaltet schließlich noch die Anzahl der durchgeführten Messungen (measurements), die Summe aller durch die einzelnen Kenngrößen $X_i$ für die Güte $Q_s$ des Signals tatsächlich erbrachten Beiträge $P_i$ (sum result) und die Summe durch alle Kenngrößen $X_i$ für die Güte $Q_s$ des Signals maximal erbringbaren Beiträge **$P_i$** (points of total).

Die geänderten Referenzwerte $X_{Refi}$ und Gewichtungsfaktoren $G_i$ können für nachfolgende Messungen als sogenannte Profile abgesperrt werden. Auch die einzelnen gemessenen Kenngrößen $X_i$, die ermittelten normierten und unnormierten Abweichungen $\Delta \overline{X}_i$ und $\Delta X_i$ sowie die von den einzelnen gemessenen Kenngrößen $X_i$ erzielten Beiträge $P_i$ für die Güte $Q_s$ des Übertragungsesignals können für nachfolgende Zwecke, zum Beispiel statistische Auswertungen, im Hauptrechner 50 abgespeichert werden.

Optional können die einzelnen Berechnungen des erfindungsgemäßen Verfahrens zur Bewertung der Güte $Q_s$ des Signals auch gesperrt werden. In diesem Fall werden die einzelnen gemessenen Kenngrößen $X_i$ des Übertragungssignals einzig für Protokoll- und Archivierungszwecke im Hauptrechner 50 abgespeichert.

Die Erfindung ist nicht auf die dargestellten Ausführungsformen beschränkt. Bezüglich digitaler Rundfunksignale eignet sich das erfindungsgemäße Verfahren natürlich auch für digitale Audio-Rundfunksignale, z. B. nach dem DAB (Digital Audio Broadcasting)-Standard, und für digitale Fernsehrundfunsignale nicht nur nach dem DVB-T-Standard, sondern auch z. B. für VSB-Signale nach dem amerikanischen ATSC-Standard.

## Patentansprüche

1. Verfahren zur Bewertung der Güte ($Q_s$) eines digital modulierten Übertragungs-Signals anhand der Abweichung ($\Delta X_i$) von mehreren gemessenen Kenngrößen ($X_i$) des Signals zu den dazugehörigen Referenzwerten ($X_{Refi}$), die sich aus der Spezifikation des Übertragungsstandards ergeben,
wobei die Güte ($Q_s$) durch Mittelung aller zu den jeweiligen Kenngrößen ($Q_s$) ermittelten und normierten Abweichungen ($\Delta \overline{X}_i$) berechnet wird und
wobei der berechnete Wert der Güte ($Q_s$) und die zu den jeweiligen Kenngrößen ($X_i$) ermittelten und normierten Abweichungen ($\Delta \overline{X}_i$) visualisiert werden,
**dadurch gekennzeichnet,**
**dass** mehrere Test-Meßempfänger (10-40), die an verschiedenen Positionen im Netz des zu übertragenen Signals aufgestellt werden, die Kenngröße ($X_i$) des Signals ermitteln, und
**dass** ein Hauptrechner (50) über eine Fernabfrage auf der Basis von Standddard-Datenübertragungsschnittstellen

die ermittelten Kenngrößen ($X_i$) des Signals von den einzelnen Test-Meßempfängern (10; 10-40) abfragt und die Güte ($Q_s$) des digital modulierten Übertragungs-Signals berechnet und visualisiert.

2. Verfahren nach Anspruch 1,
**dadurch gekennzeichnet,**
**dass** die zu den jeweiligen Kenngrößen ($X_i$) ermittelten Abweichungen ($\Delta X_i$) zueinander gewichtet werden.

3. Verfahren nach Anspruch 1 oder 2,
**dadurch gekennzeichnet,**
**dass** die ermittelte Abweichung ($\Delta X_i$) zwischen dem Referenzwert ($X_{Refi}$) und der gemessenen Kenngröße ($X_i$) durch den Maximalwert der Abweichung ($\Delta X_i$) des Referenzwertes ($X_{Refi}$) zu einer ursprünglich festgelegten oberen Signalbereichsgrenze ($X_{upi}$) und der Abweichung ($\Delta X_i$) des Referenzwertes ($X_{Refi}$) zu einer ursprünglich festgelegten unteren Signalbereichsgrenze ($X_{lowi}$) normiert wird.

4. Verfahren nach Anspruch 3,
**dadurch gekennzeichnet,**
**dass** die Abweichung ($\Delta X_i$) der gemessenen Kenngröße ($X_i$) vom Referenzwert ($X_{Refi}$) durch Differenzbildung zwischen dem Referenzwert ($X_{Refi}$) und der gemessenen Kenngröße ($X_i$) und anschließende Betragsbildung berechnet wird.

5. Verfahren nach Anspruch 3 oder 4,
**dadurch gekennzeichnet,**
**dass** die Abweichung ($\Delta X_i$) des Referenzwertes ($X_{Refi}$) von der oberen oder unteren Signalbereichsgrenze ($X_{upi}$, $X_{lowi}$) durch Differenzbildung zwischen dem Referenzwert ($X_{Refi}$) und der oberen oder unteren Signalbereichsgrenze ($X_{upi}$, $X_{lowi}$) und anschließende Betragsbildung berechnet wird.

6. Verfahren nach einem der Ansprüche 3 bis 5,
**dadurch gekennzeichnet,**
**dass** die gemessene Kenngröße ($X_i$) auf einen ursprünglich festgelegten oberen beziehungsweise unteren Signalbereichsgrenzwert ($X_{upi}$, $X_{lowi}$) gesetzt wird, wenn die gemessene Kenngröße ($X_i$) größer beziehungsweise kleiner als der obere beziehungsweise untere Signalbereichsgrenzwert ($X_{upi}$, $X_{lowi}$) ist.

7. Verfahren nach einem der Ansprüche 3 bis 6,
**dadurch gekennzeichnet,**
**dass** die normierten Abweichungen ($\Delta \overline{X}_i$) linear oder quadratisch bewertet werden.

8. Verfahren nach einem der Ansprüche 3 bis 6,
**dadurch gekennzeichnet,**
**dass** die Referenzwerte ($X_{Refi}$) und die Kenngrößen ($X_i$) logarithmisch oder exponentiell bewertet werden.

9. Verfahren nach einem der Ansprüche 1 bis 8,
**dadurch gekennzeichnet,**
**dass** der berechnete Wert der Güte ($Q_s$) und/oder die zu den jeweiligen Kenngrößen ($X_i$) ermittelten und normierten Abweichungen ($\Delta \overline{X}_i$) mit einer Farbskala visualisiert werden.

10. Computerprogramm mit Programmcode-Mitteln, das dazu angepasst ist, alle Schritte gemäß einem der Ansprüche 1 bis 9 durchführen zu können, wenn das genannte Computerprogramm auf einem Computer oder einem digitalen Signalprozessor ausgeführt wird.

11. Maschinenlesbarer Datenträger mit darauf gespeicherten Programmcode-Mitteln, das dazu angepasst ist, alle Schritte gemäß einem der Ansprüche 1 bis 9 durchführen zu können, wenn das Computerprogramm mit den Programmcode-Mitteln auf einem Computer oder einem digitalen Signalprozessor ausgeführt wird.

12. Vorrichtung zur Bewertung der Güte ($Q_s$) eines digital modulierten Übertragungs-Signals bestehend aus mehreren Test-Meßempfängern (10) zur Erfassung des digital modulierten Übertragungs-Signals und einem Hauptrechner (50) zur Ermittlung der Güte ($Q_s$) des digital modulierten Übertragungs-Signals,
**dadurch gekennzeichnet,**
**dass** der Hauptrechner (50) das Verfahren nach einem der Ansprüche 1 bis 9 ausführt, und

**dass** mehrere Test-Meßempfänger (10-40), die die Kenngröße ($X_i$) des Signals ermitteln, an verschiedenen Positionen im Netz des zu übertragenen Signals aufgestellt sind und die einzelnen Test-Meßempfänger (10; 10-40) mit dem Hauptrechner (50), der die Güte ($Q_s$) des digital modulierten Übertragungs-Signals berechnet und visualisiert, über Standdard-Datenübertragungsschnittstellen zur Durchführung einer Fernabfrage der im jeweiligen Test-Meßempfänger (10-40) ermittelten Kenngröße ($X_i$) des Signals verbunden sind.

**13.** Vorrichtung nach Anspruch 12,
**dadurch gekennzeichnet,**
**dass** der Hauptrechner (50) zur grafischen Viualisierung der Ergebnisse mit einer grafischen Anzeigeeinrichtung (70) verbunden ist.

**Claims**

1. Method for evaluating the quality ($Q_s$) of a digitally-modulated transmission signal on the basis of the deviation ($\Delta X_i$) of several measured parameters ($X_i$) of the signal relative to the associated reference values ($X_{Refi}$), which are obtained from the specification of the transmission standard,
   wherein the quality ($Q_s$) is calculated by averaging all of the deviations ($\Delta \overline{X_i}$) determined and scaled relative to the respective parameters ($Q_s$) and wherein the calculated value of the quality ($Q_s$) and the deviations ($\Delta \overline{X_i}$) determined and scaled relative to the respective parameters ($X_i$) are visualised,
   **characterised in that**
   several test receivers (10-40), which are set up at various positions in the network of the signal to be transmitted, determine the parameter ($X_i$) of the signal, and
   that, via a remote interrogation on the basis of standard data-transmission interfaces, a main computer (50) interrogates the determined parameters ($X_i$) of the signal from the individual test receivers (10; 10-40) and calculates and visualises the quality ($Q_s$) of the digitally-modulated transmission signal.

2. Method according to claim 1,
   **characterised in that**
   the deviations ($\Delta X_i$) determined relative to the respective parameters ($X_i$) are weighted relative to one another.

3. Method according to claim 1 or 2,
   **characterised in that**
   the determined deviation ($\Delta X_i$) between the reference value ($X_{Refi}$) and the measured parameter ($X_i$) is scaled through the maximum value of the deviation ($\Delta X_i$) of the reference value ($X_{Refi}$) relative to an originally-specified upper signal-range limit ($X_{upi}$) and of the deviation ($\Delta X_i$) of the reference value ($X_{Refi}$) relative to an originally-specified lower signal-range limit ($X_{lowi}$).

4. Method according to claim 3,
   **characterised in that**
   the deviation ($\Delta X_i$) of the measured parameter ($X_i$) from the reference value ($X_{Refi}$) is calculated through difference formation between the reference value ($X_{Refi}$) and the measured parameter ($X_i$) and subsequent modulus formation.

5. Method according to claim 3 or 4,
   **characterised in that**
   the deviation ($\Delta X_i$) of the reference value ($X_{Refi}$) from the upper or lower signal-range limit ($X_{upi}$, $X_{lowi}$) is calculated through difference formation between the reference value ($X_{Refi}$) and the upper or lower signal-range limit ($X_{upi}$, $X_{lowi}$) and subsequent modulus formation.

6. Method according to any one of claims 3 to 5,
   **characterised in that**
   the measured parameter ($X_i$) is set at an originally-specified upper or respectively lower signal-range limit value ($X_{upi}$, $X_{lowi}$), if the measured parameter ($X_i$) is larger or respectively smaller than the upper or respectively lower signal-range limit value ($X_{upi}$, $X_{lowi}$).

7. Method according to any one of claims 3 to 6,
   **characterised in that**
   the scaled deviations ($\Delta \overline{X_i}$) are evaluated in a linear or quadratic manner.

**8.** Method according to any one of claims 3 to 6,
**characterised in that**
the reference values ($X_{Refi}$) and the parameters ($X_i$) are evaluated logarithmically or exponentially.

**9.** Method according to any one of claims 1 to 8,
**characterised in that**
the calculated value of the quality ($Q_s$) and/or the deviations ($\Delta \overline{X_i}$) determined and scaled relative to the respective parameters ($X_i$) are visualised with a colour scale.

**10.** Computer program with program-code means, which is adapted in order to implement all of the stages according to any one of claims 1 to 9, when the named computer program is executed on a computer or a digital signal processor.

**11.** Machine-readable data carrier with program-code means stored thereon, which is adapted in order to implement all of the stages according to any one of claims 1 to 9, when the computer program with the program-code means is executed on a computer or a digital signal processor.

**12.** Device for evaluating the quality ($Q_s$) of a digitally-modulated transmission signal consisting of several test receivers (10) for registering the digitally-modulated transmission signal and a main computer (50) for determining the quality ($Q_s$) of the digitally-modulated transmission signal,
**characterised in that**
the main computer (50) executes the method according to any one of claims 1 to 9, and
that several test receivers (10-40), which determine the parameter ($X_i$) of the signal, are set up at various positions in the network of the signal to be transmitted, and the individual test receivers (10; 10-40) are connected to the main computer (50), which calculates and visualises the quality ($Q_s$) of the digitally-modulated transmission signal, via standard data-transmission interfaces for the implementation of a remote interrogation of the parameter ($X_i$) of the signal determined in the respective test receiver (10-40).

**13.** Device according to claim 12,
**characterised in that**
the main computer (50) is connected to a graphic display device (70) for the graphic visualisation of the results.

**Revendications**

**1.** Procédé d'évaluation de la qualité ($Q_s$) d'un signal de transmission modulé numériquement à l'aide de l'écart ($\Delta X_i$) de plusieurs grandeurs caractéristiques mesurées ($X_i$) du signal avec les valeurs de référence respectives ($X_{Refi}$) qui résultent de la spécification de la norme de transmission,
sachant que la qualité ($Q_s$) est calculée en faisant la moyenne de tous les écarts normalisés ($\Delta \overline{X_i}$) et déterminés par rapport aux grandeurs caractéristiques ($X_i$) respectives et
sachant que la valeur calculée de la qualité ($Q_s$) et les écarts normalisés ($A\overline{X_i}$) et déterminés par rapport aux grandeurs caractéristiques respectives ($X_i$) sont visualisés,
**caractérisé**
**en ce que** plusieurs récepteurs de mesure de test (10 - 40), qui sont installés à diverses positions dans le réseau du signal à transmettre, déterminent la grandeur caractéristique ($X_i$) du signal, et
**en ce qu'**un calculateur principal (50) demande au moyen d'une demande à distance sur la base d'interfaces standard de transmission de données les grandeurs caractéristiques ($X_i$) du signal déterminées par les différents récepteurs de mesure de test (10 ; 10 - 40) puis calcule et visualise la qualité ($Q_s$) du signal de transmission modulé numériquement.

**2.** Procédé selon la revendication 1,
**caractérisé en ce que**
les écarts ($\Delta X_i$) déterminés par rapport aux grandeurs caractéristiques ($X_i$) sont pondérés les uns par rapport aux autres.

**3.** Procédé selon la revendication 1 ou 2,
**caractérisé en ce que**
l'écart ($\Delta X_i$) déterminé entre la valeur de référence ($X_{Refi}$) et la grandeur caractéristique ($X_i$) mesurée est normalisé par la valeur maximale de l'écart ($\Delta X_i$) de la valeur de référence ($X_{Refi}$) à une limite de plage de signal supérieure définie à l'origine ($X_{upi}$) et de l'écart ($\Delta X_i$) de la valeur de référence ($X_{Ref}$) à une limite de plage de signal inférieure définie à l'origine ($X_{lowi}$).

4. Procédé selon la revendication 3,
**caractérisé en ce que**
l'écart ($\Delta X_i$) de la grandeur caractéristique mesurée ($X_i$) à la valeur de référence ($X_{Refi}$) est calculé en formant la différence entre la valeur de référence ($X_{Refi}$) et la grandeur caractéristique ($X_i$) et en formant ensuite la valeur absolue.

5. Procédé selon la revendication 3 ou 4,
**caractérisé en ce que**
l'écart ($\Delta X_i$) de la valeur de référence ($X_{Refi}$) aux limites de plage de signal supérieure et inférieure ($X_{upi}$, $X_{lowi}$) est calculé en formant la différence entre la valeur de référence ($X_{Refi}$) et la limite de plage de signal supérieure ou inférieure ($X_{upi}$, $X_{lowi}$) et en formant ensuite la valeur absolue.

6. Procédé selon l'une quelconque des revendications 3 à 5,
**caractérisé en ce que**
la grandeur caractéristique mesurée ($X_i$) est mise à une valeur limite de plage de signal supérieure respectivement inférieure définie à l'origine ($X_{upi}$, $X_{lowi}$) si la grandeur caractéristique mesurée ($X_i$) est supérieure respectivement inférieure à la valeur limite de plage de signal ($X_{upi}$, $X_{lowi}$).

7. Procédé selon l'une quelconque des revendications 3 à 6,
**caractérisé en ce que** les écarts normalisés ($AX_i$) sont évalués de manière linéaire ou quadratique.

8. Procédé selon l'une quelconque des revendications 3 à 6,
**caractérisé en ce que**
les valeurs de référence ($X_{Refi}$) et les grandeurs caractéristiques ($X_i$) sont évaluées de manière logarithmique ou exponentielle.

9. Procédé selon l'une quelconque des revendications 1 à 8,
**caractérisé en ce que**
la valeur calculée de la qualité ($Q_s$) et/ou les écarts ($\Delta X_i$) déterminés par rapport aux grandeurs caractéristiques ($X_i$) respectives et normalisés sont visualisés avec une échelle de couleurs.

10. Programme informatique avec des moyens de codes de programmation qui sont adaptés afin de pouvoir effectuer toutes les étapes selon l'une quelconque des revendications 1 à 9 si ledit programme informatique est exécuté sur un ordinateur ou un processeur de signal numérique.

11. Support lisible par une machine sur lequel sont enregistrés des moyens de codes de programmation qui sont adaptés afin de pouvoir effectuer toutes les étapes selon l'une quelconque des revendications 1 à 9 si le programme informatique avec les moyens de codes de programmation est exécuté sur un ordinateur ou un processeur de signal numérique.

12. Dispositif d'évaluation de la qualité ($Q_s$) d'un signal de transmission modulé numériquement se composant de plusieurs récepteurs de mesure de test (10) destinés à détecter le signal de transmission modulé numériquement et d'un calculateur principal (50) destiné à déterminer la qualité ($Q_s$) du signal de transmission modulé numériquement, **caractérisé**
**en ce que** le calculateur principal (50) exécute le procédé selon l'une quelconque des revendications 1 à 9, et
**en ce que** plusieurs récepteurs de mesure de test (10 - 40), qui déterminent la grandeur caractéristique ($X_i$) du signal, sont installés à diverses positions dans le réseau du signal à transmettre et que les différents récepteurs de mesure de test (10 ; 10 - 40) sont reliés au calculateur principal (50), qui calcule et visualise la qualité ($Q_s$) du signal de transmission modulé numériquement, par des interfaces standard de transmission de données afin de réaliser une demande à distance de la grandeur caractéristique ($X_i$) du signal déterminée dans le récepteur de mesure de test respectif (10-40).

13. Dispositif selon la revendication 12,
**caractérisé en ce que**
le calculateur principal (50) est relié à un système d'affichage graphique (70) afin de visualiser les résultats.

Fig. 1A

Fig. 1B

START

Einlesen der einzelnen
Kenngrößen ⟋S10

optional Freischalten der
einzelnen Kenngrößen ⟋S20

Auswahl eines Referenzwertes aus
einem Referenzwertsatz für jede
freigeschaltete Kenngröße ⟋S30

falls gemessene Kenngröße außerhalb
des festgelegten Signalbereichs
Bemessung der gemessenen Kenngröße
auf Signalbereichsgrenze ⟋S40

Berechnung der Abweichung zum
Referenzwert für jede gemessene
Kenngröße ⟋S50

Normierung jeder der
Abweichungen ⟋S60

Kenngrößentypische Bewertung jeder
normierten Abweichung ⟋S70

Auswahl eines Gewichtungsfaktors
für jede normierte Abweichung ⟋S80

Berechnung der Signalgüte durch
gewichtete Mittelung der Abweichungen ⟋S90

verbale und grafische Visualisierung der
Einzelergebnisse und aggregierten Ergebnisse ⟋S100    Fig. 2

ENDE

| Min BER Integration: | 10 | | | | |
|---|---|---|---|---|---|

## MEASUREMENT RESULTS

| | Measurement | Poor | Excellent | Weight | Result |
|---|---|---|---|---|---|
| SYNC: | | No | Yes | | |
| ☑ LEVEL: | -46.5 dBm | ± 15 dB | -20 dBm | 70 | 0 points |
| | | | 0. % | | 0 % (of sum) |
| ☑ FREQUENCY OFFSET: | -395.2 Hz | ± 30000 Hz | ± 0 Hz | 20 | 20 points |
| | | | 100. % | | 2.53 % (of sum) |
| ☑ SYMBOL RATE OFFSET: | 15.1 Hz | ± 10000 Hz | ± 0 Hz | 20 | 20 points |
| | | | 100. % | | 2.53 % (of sum) |
| ☑ MER (RMS) dB (EQUALIZER ON): | 33.8 dB | 30 dB | 47 dB | 80 | 18 points |
| | | | 22.4 % | | 2.28 % (of sum) |
| ☑ MER (RMS) % (EQUALIZER ON): | 2.03 % | 3.2 % | 45 % | 80 | 34 points |
| | | | 42.5 % | | 4.31 % (of sum) |

Ready    NUM

Fig. 3

| ☑ CCDF 1E-3 DELTA CCDF (ENV): | 0.1 dB | ±▨▨5 dB | ▨▨0 dB | ▨▨30 | 24 points |
| | | 80. % | | | 3.04 % (of sum) |

## EFA Graphics

☐ Constellation Diagram:      ☐ Eye Monitoring (40 sec):

☐ Spectrum:      ☐ Amplitude / Phase:

☐ CCDF (RF):      ☐ CCDF (ENV):

☐ Phase Jitter:      ☐ Echo Pattern:

## WARNINGS

Warning:
The following
measurement values are
below poor value:
LEVEL
EVM (RMS) % (EQUALIZER OFF)
BER BEFORE RS
BER AFTER RS

## SUMMARY

Taken into account:      25 measurements

Sum result:      789 points of total:      1370 points

## EFA TxCheck Quality Value:    57%

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20020064233 A1

- DE 10163505 A1